# EUROPÄISCHE PATENTSCHRIFT

(11) **EP 4 091 421 B1**
(45) Veröffentlichungstag und Bekanntmachung des Hinweises auf die Patenterteilung: **02.10.2024**
(21) Anmeldenummer: 22155901.6
(22) Anmeldetag: 09.02.2022
(51) Int. Cl.: A01D 41/12, A01F 12/60

(54) **ERNTEMASCHINE MIT TANKERWEITERUNG**
HARVESTING MACHINE WITH TANK EXTENSION
MOISSONNEUSE AGRICOLE POURVUE D'EXTENSION DE RÉSERVOIR

(30) Priorität: 19.05.2021 DE 102021113035
(43) Veröffentlichungstag der Anmeldung: 23.11.2022
(73) Patentinhaber: CLAAS Selbstfahrende Erntemaschinen GmbH, 33428 Harsewinkel (DE)
(72) Erfinder: Burbank, Martin, 48231 Warendorf (DE)
(74) Vertreter: CLAAS Gruppe

(56) Entgegenhaltungen:
- CA-A1- 2 400 278
- US-A1- 2020 340 285
- US-B2- 9 826 681
- US-B2- 9 955 630

## Beschreibung

Die vorliegende Erfindung betrifft eine Erntemaschine, insbesondere einen Mähdrescher, deren Ernteguttank eine aus mehreren beweglichen Elementen gebildete Tankerweiterung umfasst. Eine solcher Mähdrescher ist aus DE 10 2004 007 673 A1 bekannt. Der Ernteguttank dieses Mähdreschers umfasst einen starrwandigen unteren Teil, der in die Karosserie des Mähdreschers einbezogen ist, und eine Tankerweiterung umfasst mehrere plattenförmige Elemente, die um entlang eines oberen Randes des unteren Teils verlaufende Achsen zwischen einer den unteren Teil überdeckenden Ruhestellung und einer aufgerichteten Betriebsstellung schwenkbar sind.

US2020340285 offenbart ein weiteres Beispiel einer aus mehreren beweglichen Elementen gebildeten Tankerweiterung.

Um Wartungsarbeiten im Innern des Korntanks eines Mähdreschers durchführen zu können, ist in JP2019004784 vorgeschlagen, in einer Seitenwand der Karosserie des Mähdreschers eine Klappe vorzusehen, die ein Benutzer öffnen kann, um in den Korntank hineinzusteigen. Das Klettern durch eine solche Klappe ist sehr mühsam und unbequem, wenn die geringe Größe der Klappe dazu zwingt, auf allen Vieren hindurchzuklettern und vor und hinter der Klappe keine geeignete Unterlage vorhanden ist, die Händen und Knien Unterstützung bietet.

Aufgabe der Erfindung ist, eine Erntemaschine zu schaffen, die einem Benutzer einen einfachen und bequemen Einstieg in den Ernteguttank ermöglicht.

Die Aufgabe wird gelöst, indem bei einer Erntemaschine mit einem Ernteguttank, der eine aus mehreren beweglichen Elementen gebildete Tankerweiterung umfasst, wenigstens einem der Elemente wenigstens eine Zugangsklappe zugeordnet ist, die in einer offenen Stellung einem Benutzer Zugang zum Innern des Ernteguttanks gewährt. Als Unterlage, die den Benutzer in der Nähe der Zugangsklappe trägt, kann hier eine Karosserieoberseite der Erntemaschine dienen.

Die Zugangsklappe füllt in einer geschlossenen Stellung einen Durchgang des wenigstens einen Elements aus. Vorzugsweise befindet sich die Zugangsklappe in der offenen Stellung innerhalb des Ernteguttanks. Indem die Klappe nach innen aufgeht, ist sichergestellt, dass sie bei vollem Tank durch dessen Inhalt blockiert wird. Daher kann kein Tankinhalt austreten, wenn die Klappe zur Unzeit geöffnet wird.

Der Durchgang ist vorzugsweise ein nach oben offener Ausschnitt der Tankerweiterung. Dies ermöglicht es dem Benutzer, in aufrechter Körperhaltung in den Ernteguttank ein- und wieder herauszusteigen.

Vorzugsweise ist der Ausschnitt in genau einem der beweglichen Elemente gebildet, und auf verschiedenen Seiten des Ausschnitts liegende Teile des einen beweglichen Elements sind untereinander drehfest verbunden. So können die verschiedenen Seiten des Ausschnitts liegenden Teile des beweglichen Elements nicht unabhängig voneinander schwenken, was für die mechanische Stabilität der Tankerweiterung wichtig ist.

Die Zugangsklappe kann ein sich entlang ihrer oberen Kante erstreckendes Versteifungsprofil aufweisen, um dem Druck von Erntegut im Tank ohne nennenswerte Durchbiegung standhalten zu können. Ähnliche Versteifungsprofile können auch an den beweglichen Elementen vorgesehen sein, so dass das Versteifungsprofil der Zugangsklappe in der geschlossenen Stellung der Zugangsklappe angrenzende Versteifungsprofile eine Lücke zwischen den Versteifungsprofilen der beweglichen Elemente ausfüllt.

Um Druck des Tankinhalts sicher standhalten zu können, sollte das Versteifungsprofil der Zugangsklappe in seiner Längsrichtung zugbelastbar mit wenigstens einem Versteifungsprofil der beweglichen Elemente in Eingriff sein. Wenn die Zugangsklappe um eine seitliche Achse schwenkbar ist, dann an dieser Seite ein Scharnier eine zugbelastbare Verbindung zwischen der Zugangsklappe und einem angrenzenden Bereich des beweglichen Elements bilden, und es genügt, wenn das Versteifungsprofil an der gegenüberliegenden Seite zugbelastbar in Eingriff ist. Eine Schwenkachse der Klappe kann aber auch entlang deren vom Versteifungsprofil abgewandter unterer Kante verlaufen; in diesem Fall sollte der zugbelastbare Eingriff an beiden Enden des Versteifungsprofils der Klappe gegeben sein.

Es können Mittel zum Fixieren der Zugangsklappe in der offenen Stellung, vorzugsweise um ca. 90° gegen die geschlossene Stellung geschwenkt, vorgesehen sein. Wenn die Zugangsklappe in dieser Weise fixiert ist, kann ihr Versteifungsprofil als eine Art Handgriff oder Geländer fungieren, das den Ein- und Ausstieg aus dem Ernteguttank erleichtert.

Die beweglichen Elemente können zwischen einer Ruhestellung, in der sie einen unteren Teil des Ernteguttanks überdecken, um horizontale Achsen in eine Gebrauchsstellung schwenkbar sein, in der sie von den Achsen aus nach oben divergieren. Diese schräge Stellung der beweglichen Elemente macht ein Übersteigen der beweglichen Elemente besonders schwierig, so dass gerade hier die erfindungsgemäße Zugangsklappe besonders vorteilhaft ist.

Je größer die beweglichen Elemente sind, umso schwieriger ist ein Übersteigen. Daher ist die erfindungsgemäße Zugangsklappe besonders wirksam bei beweglichen Elementen, die so groß sind, dass Paare der beweglichen Elemente, die einander in der Gebrauchsstellung beiderseits der Tankerweiterung gegenüberliegen, in der Ruhestellung wenigstens teilweise überlappen.

Um einem Benutzer das Einsteigen in einen unteren Teil des Ernteguttanks zu ermöglichen, sollte eine Leiter vorgesehen sein.

Eine solche Leiter kann in einem unteren Teil des Ernteguttanks zur Zugangsklappe führend montiert sein.

Einer alternativen Ausgestaltung zufolge kann die Leiter auch in die Zugangsklappe integriert sein; insbesondere wenn die Zugangsklappe um eine entlang ihrer Unterkante verlaufende Achse schwenkbar ist, kann die Leiter an der in der geschlossenen Stellung außenliegenden Seite der Zugangsklappe vorgesehen sein und gelangt durch das Öffnen und Hineinschwenken der Zugangsklappe in den Korntank in eine Stellung, in der die Leiter in den unteren Teil des Tanks hineinführt und benutzt werden kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht eines erfindungsgemäßen Mähdreschers;
- Fig. 2: eine perspektivische Außenansicht einer Tankerweiterung des Mähdreschers;
- Fig. 3: eine perspektivische Innenansicht der Tankerweiterung;
- Fig. 4: eine Detailansicht der Tankerweiterung bei geschlossener Zugangsklappe; und
- Fig. 5: einen schematischen Längsschnitt von Versteifungsprofilen der Zugangsklappe und eines die Zugangsklappe aufnehmenden beweglichen Elements.

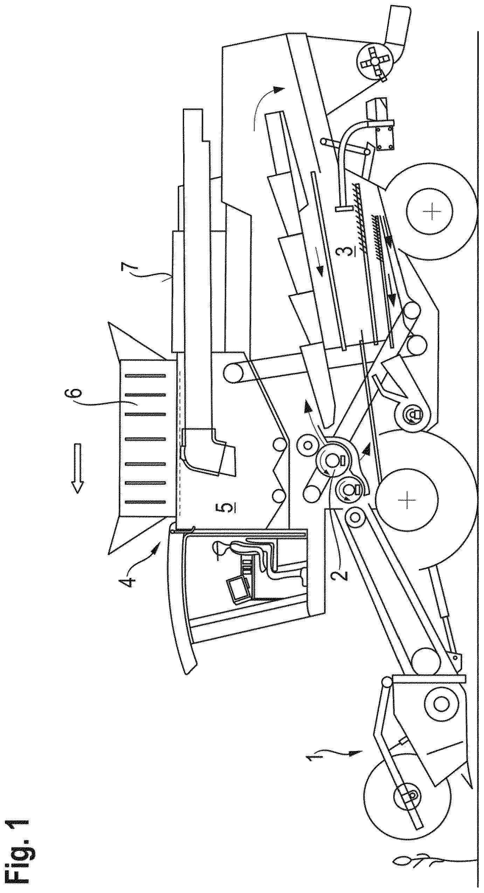

Fig. 1 zeigt teils in Seitenansicht, teils im Schnitt einen Mähdrescher als Beispiel einer erfindungsgemäßen Erntemaschine. Ein Erntevorsatz 1 sowie Dresch- und Reinigungsorgane 2, 3 des Mähdreschers sind von an sich bekannter Bauart und brauchen an dieser Stelle nicht beschrieben zu werden. Ein Ernteguttank 4, der das gedroschene und gereinigte Korn aufnimmt, umfasst einen unteren Teil 5, der innerhalb einer Karosserie des Mähdreschers untergebracht ist, sowie eine Tankerweiterung 6, die in ihrer in der Fig. gezeigten Gebrauchsstellung über eine Oberseite 7 der Karosserie aufragt.

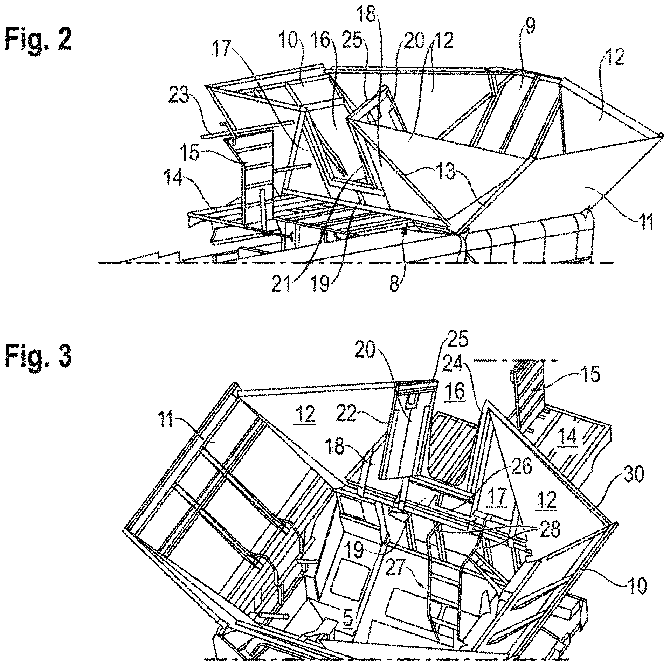

Seitenwände der Tankerweiterung 6 sind durch eine Mehrzahl von in Fig. 2 und 3 sichtbaren, in sich steifen plattenförmigen beweglichen Elementen 8-11 gebildet, die jeweils um entlang ihrer Unterkanten in Höhe der Oberseite 7 verlaufende Achsen schwenkbar mit der Karosserie verbunden sind und einander paarweise gegenüberliegen. Die beweglichen Elemente, 8, 9 eines Paars sind trapezförmig, wobei die längere der beiden Grundlinien des Trapezes die untere Kante des Elements 8 bzw. 9 bildet. Die beweglichen Elemente, 10, 11 eines weiteren Paars sind rechteckig. Zwischenräume zwischen einer schrägen Seite eines der Elemente 8, 9 und einer kürzeren Seite eines der Elemente 10, 11 sind durch flexible dreieckige Planen 12 ausgefüllt, die mit den angrenzenden beweglichen Elementen 8-11 jeweils entlang von Kanten 13 faltbar verbunden sind. Dieser Aufbau ermöglicht es der Tankerweiterung 6, in eine Ruhekonfiguration überzugehen, indem die beweglichen Elemente 8-11 zueinander hin bis in eine horizontale Stellung geschwenkt werden, in der sie den unteren Teil 5 nach oben verschließen und die einander gegenüberliegenden beweglichen Elemente 8 und 9 bzw. 10 und 11 miteinander überlappen.

Die Oberseite 7 umfasst einen begehbaren Bereich 14 sowie ein Element 15, das zwischen einer mit dem begehbaren Bereich bündigen Stellung und einer in Fig. 2 und 3 gezeigten aufrechten Stellung schwenkbar ist. In der aufrechten Stellung ist das Element 15 arretierbar, um einem Benutzer, der sich auf dem begehbaren Bereich 14 aufhält, Halt zu bieten.

In dem an den begehbaren Bereich 14 angrenzenden beweglichen Element 8 ist ein nach oben offener Ausschnitt 16 gebildet. Teile 17, 18 an entgegengesetzten Seiten des Ausschnitts 16 sind über einen unter dem Ausschnitt 16 verlaufenden Steg 19 starr miteinander verbunden. Eine Zugangsklappe 20 ist entlang einer seitlichen Kante 21 des Ausschnitts 16 an den Teil 18 angelenkt. Fig. 2 und 3 zeigen die Zugangsklappe 20 in einer gegen die Ebene des beweglichen Elements 8 um ca. 90° geschwenkten offenen Stellung. Die Zugangsklappe 20 ist durch in der Fig. nicht gezeigte Mittel in der offenen Stellung fixierbar.

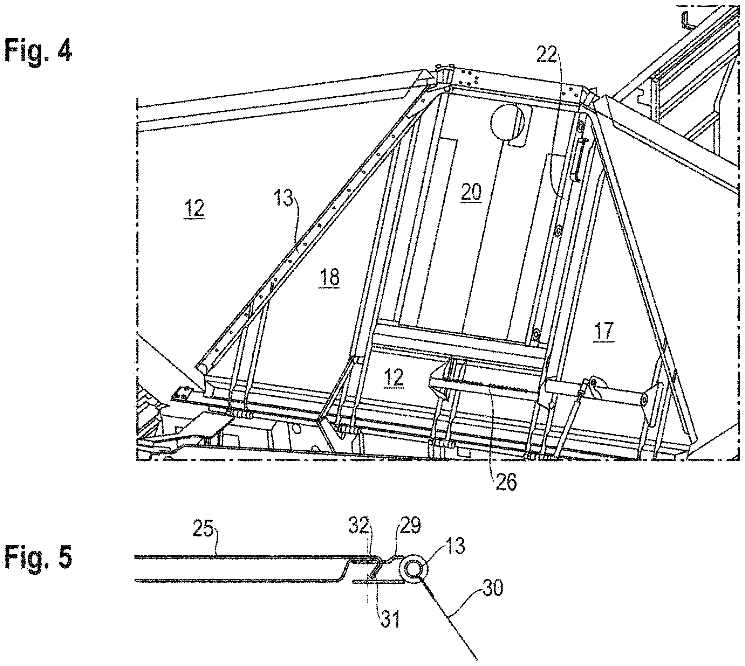

Fig. 4 zeigt eine geschlossene Stellung der Zugangsklappe 20. In der geschlossenen Stellung liegt ein seitlicher Randbereich 22 der Zugangsklappe 20 auf einem Randsteg 24 des Teils 17 (s. Fig. 3) auf. Die Zugangsklappe 20 kann aus der geschlossenen Stellung nur ins Innere der Tankerweiterung 6 hinein schwenken; ein Aufspringen der Zugangsklappe 20 unter dem Druck von darauf liegendem Erntegut ist nicht möglich.

Wenn die Zugangsklappe 20 in der offenen Stellung ist, kann ein Benutzer in aufrechter Körperhaltung den Ausschnitt 16 passieren. Eine Griffstange 23 an der Oberkante des Elements 15 bietet dem Benutzer Halt auf dem Weg zum Ausschnitt 16; hinter dem Ausschnitt 16 kann er sich an einem eine obere Kante der Zugangsklappe 20 bildenden Versteifungsprofil 25 wie an einem Geländer festhalten.

An einer Innenseite des Stegs 19 befindet sich eine erste Stufe 26, auf die der Benutzer nach Passieren des Ausschnitts treten kann. Darunter erstreckt sich eine Leiter 27, die es ihm erlaubt, in den unteren Teil 5 des Ernteguttanks 4 herabzusteigen. Obere Enden 28 der Leiter 27 sind an einer Wand des unteren Teils 5 befestigt; die Leiter 27 bleibt daher an Ort und Stelle, wenn die Tankerweiterung 6 in die Ruhestellung überführt wird.

Fig. 5 zeigt einen schematischen Längsschnitt durch das Versteifungsprofil 25, ein daran anschließendes Versteifungsprofil 29 des beweglichen Elements 8 und einen zugfesten Riemen 30, der eine Oberkante einer daran angrenzenden dreieckigen Plane 12 bildet. Das Versteifungsprofil 29 und der Riemen 30 bilden zusammen mit Versteifungsprofilen der anderen beweglichen Elemente 9-11 und Riemen der anderen Planen 12 einen durchgehenden Rahmen, der sich bis zum Scharnier an der seitlichen Kante 21 und einem in Fig. 5 nicht gezeigten scharniernahen Ende des Versteifungsprofils 25 erstreckt. An einem scharnierfernen Ende des Versteifungsprofils 25 ist ein Widerhaken 31 geformt. In einem geschlossenen, aber unbelasteten Zustand der Zugangsklappe 20 greift der Widerhaken 31 wie gezeigt frei in ein Loch 32 oder eine Aussparung des Versteifungsprofilabschnitts 29 ein und kann dieses ungehindert wieder verlassen, wenn die Zugangsklappe 20 geöffnet wird. Wenn hingegen die beweglichen Elemente 8-11 durch das Gewicht von Erntegut in der Tankerweiterung 6 auseinandergedrückt werden, dann werden auch die Versteifungsprofile 25, 29 längs auseinandergezogen. In diesem Fall greift der Widerhaken 31 hinter einem Rand des Lochs 32 oder in einen Hinterschnitt der Aussparung ein. So verhindert das Versteifungsprofil 25 zum einen, dass das durch den Ausschnitt 16 geschwächte bewegliche Element 8 unter der Last des Tankinhalts verbogen und seine Teile 17, 18 auseinandergezogen werden, zum anderen erschwert es in durchaus erwünschter Weise ein Öffnen der Zugangsklappe 20, wenn die Tankerweiterung 6 nicht leer ist..

Einer nicht gezeichneten Alternative zufolge ist die Zugangsklappe 20 anstatt um eine seitliche Achse um eine entlang seiner Unterkante verlaufenden Achse schwenkbar. Die Stufe 26 entfällt hier, stattdessen kommt in der offenen Stellung ein achsnaher Teil der Zugangsklappe 20 an der Innenseite des Stegs 19 zur Anlage; ein achsferner Teil ragt über den Steg 19 hinaus in den unteren Teil 5 des Ernteguttanks 4. An der in der offenen Stellung obenliegenden Seite der Zugangsklappe 20 sind Treppenstufen vorgesehen, die dem Benutzer ein bequemes Herabsteigen in den unteren Teil 5 ermöglichen.

### Bezugszeichen

- 1: Erntevorsatz
- 2: Dreschorgan
- 3: Reinigungsorgan
- 4: Ernteguttank
- 5: unterer Teil
- 6: Tankerweiterung
- 7: Oberseite
- 8: (trapezförmiges) bewegliches Element
- 9: (trapezförmiges) bewegliches Element
- 10: (rechteckiges) bewegliches Element
- 11: (rechteckiges) bewegliches Element
- 12: Plane
- 13: Kante
- 14: begehbarer Bereich
- 15: schwenkbares Element
- 16: Ausschnitt
- 17: Teil (des beweglichen Elements 8)
- 18: Teil (des beweglichen Elements 8)
- 19: Steg
- 20: Zugangsklappe
- 21: seitliche Kante
- 22: seitlicher Randbereich
- 23: Griffstange
- 24: Randsteg
- 25: Versteifungsprofil (der Zugangsklappe 20)
- 26: Stufe
- 27: Leiter
- 28: oberes Ende
- 29: Versteifungsprofil
- 30: Riemen
- 31: Widerhaken
- 32: Loch

## Patentansprüche

1. Erntemaschine mit einem Ernteguttank (4), der eine aus mehreren beweglichen Elementen (8,9, 10, 11) gebildete Tankerweiterung (6) umfasst, **dadurch gekennzeichnet, dass** wenigstens einem der Elemente (8) wenigstens eine Zugangsklappe (20) zugeordnet ist, die in einer offenen Stellung einem Benutzer Zugang zum Innern des Ernteguttanks (4) gewährt, wobei die Zugangsklappe (20) in einer geschlossenen Stellung einen Durchgang des wenigstens einen Elements (8) ausfüllt..

2. Erntemaschine nach Anspruch 1, **dadurch gekennzeichnet, dass** die Zugangsklappe (20) in der offenen Stellung sich innerhalb des Ernteguttanks (4) befindet.

3. Erntemaschine nach Anspruch 1 oder 2, **dadurch gekennzeichnet, dass** der Durchgang ein nach oben offener Ausschnitt (16) der Tankerweiterung (6) ist.

4. Erntemaschine nach Anspruch 3, **dadurch gekennzeichnet, dass** der Ausschnitt (16) in genau einem der beweglichen Elemente (8) gebildet und dass auf verschiedenen Seiten des Ausschnitts (16) liegende Teile (17, 18) des einen beweglichen Elements (8) untereinander drehfest verbunden sind.

5. Erntemaschine nach Anspruch 3 oder 4, **dadurch gekennzeichnet, dass** die Zugangsklappe (20) ein sich entlang ihrer oberen Kante erstreckendes Versteifungsprofil (25) umfasst, das in der geschlossenen Stellung der Zugangsklappe (20) eine Lücke zwischen Versteifungsprofilen (29) der beweglichen Elemente (8, 9, 10, 11) ausfüllt.

6. Erntemaschine nach Anspruch 5, **dadurch gekennzeichnet, dass** in der geschlossenen Stellung das Versteifungsprofil (25) der Zugangsklappe (20) in seiner Längsrichtung zugbelastbar mit wenigstens einem Versteifungsprofil (29) der beweglichen Elemente (8, 9, 10, 11) in Eingriff ist.

7. Erntemaschine nach Anspruch 5 oder 6, **gekennzeichnet durch** Mittel zum Fixieren der Zugangsklappe (20) in der offenen Stellung.

8. Erntemaschine nach einem der vorhergehenden Ansprüche, **dadurch gekennzeichnet, dass** die beweglichen Elemente (8, 9, 10, 11) zwischen einer Ruhestellung, in der sie einen unteren Teil (5) des Ernteguttanks (4) überdecken, um horizontale Achsen in eine Gebrauchsstellung schwenkbar sind, in der sie von den Achsen aus nach oben divergieren.

9. Erntemaschine nach Anspruch 8, **dadurch gekennzeichnet, dass** Paare der beweglichen Elemente (8, 9; 10, 11), die einander in der Gebrauchsstellung beiderseits der Tankerweiterung (6) gegenüberliegen, in der Ruhestellung wenigstens teilweise überlappen.

10. Erntemaschine nach einem der vorhergehenden Ansprüche, **gekennzeichnet durch** eine Leiter (27), die angeordnet ist, um einem Benutzer das Einsteigen in einen unteren Teil (5) des Ernteguttanks (4) zu ermöglichen.

11. Erntemaschine nach einem der vorhergehenden Ansprüche, **gekennzeichnet durch** eine Leiter (27), die in einem unteren Teil (5) des Ernteguttanks (4) zur Zugangsklappe (20) führend montiert ist.

## Claims

1. A harvesting machine with a harvested material tank (4) which comprises a tank extension (6) produced from a plurality of movable elements (8, 9, 10, 11), **characterized in that** at least one of the elements (8) is associated with at least one access gate (20) which, in an open position, enables a user to access the interior of the harvested material tank (4), wherein in a closed position, the access gate (20) closes a gateway for at least one element (8).

2. The harvesting machine according to claim 1, **characterized in that** in the open position, the access gate (20) is located inside the harvested material tank (4).

3. The harvesting machine according to claim 1 or claim 2, **characterized in that** the gateway comprises a cutout (16) in the tank extension (6) which is open at the top.

4. The harvesting machine according to claim 3, **characterized in that** the cutout (16) is formed in exactly one of the movable elements (8) and **in that** parts (17, 18) of one movable element (8) on different sides of the cutout (16) are connected to each other so as to be fixed against rotation.

5. The harvesting machine according to claim 3 or claim 4, **characterized in that** the access gate (20) comprises a reinforcing profile (25) extending along its upper edge such that, in the closed position of the access gate (20), a gap between reinforcing profiles (25) of the movable elements (8, 9, 10, 11) is filled.

6. The harvesting machine according to claim 5, **characterized in that** in the closed position, the reinforcing profile (25) of the access gate (20) is in engagement, in a manner which is capable of withstanding tensile stress in its longitudinal direction, with at least one reinforcing profile (29) of the movable elements (8, 9, 10, 11).

7. The harvesting machine according to claim 5 or claim 6, **characterized by** means for fixing the access gate (20) in the open position.

8. The harvesting machine according to one of the preceding claims, **characterized in that** the movable elements (8, 9, 10, 11) can be pivoted about horizontal axes between a rest position, in which they cover a lower portion (5) of the harvested material tank (4), into a service position in which they diverge upwards from the axes.

9. The harvesting machine according to claim 8, **characterized in that** pairs of the movable elements (8, 9; 10, 11) which are opposite to each other on both sides of the tank extension (6) in the service position at least partially overlap in the rest position.

10. The harvesting machine according to one of the preceding claims, **characterized by** a ladder (27) which is disposed to enable a user to climb into a lower portion (5) of the harvested material tank (4).

11. The harvesting machine according to one of the preceding claims, **characterized by** a ladder (27) which is mounted in a lower portion (5) of the harvested material tank (4) leading to the access gate (20).

## Revendications

1. Machine de récolte dotée d'une trémie pour produits récoltés (4) qui comporte une extension de trémie (6) formée de plusieurs éléments mobiles (8, 9, 10, 11), **caractérisée en ce qu'**est associée à au moins un des éléments (8), au moins une porte d'accès (20) qui, dans une position ouverte, permet à un utilisateur d'accéder à l'intérieur de la trémie pour produits récoltés (4), la porte d'accès (20) occupant, dans une position fermée, un passage de l'élément (8), au nombre d'au moins un.

2. Machine de récolte selon la revendication 1, **caractérisée en ce que**, dans la position ouverte, la porte d'accès (20) se trouve à l'intérieur de la trémie pour produits récoltés (4).

3. Machine de récolte selon la revendication 1 ou 2, **caractérisée en ce que** le passage est une découpe (16) de l'extension de trémie (6) qui est ouverte vers le haut.

4. Machine de récolte selon la revendication 3, **caractérisée en ce que** la découpe (16) est réalisée dans exactement un des éléments mobiles (8) et **en ce que** des parties (17, 18) de l'élément mobile (8), au nombre d'un, qui sont situées sur des côtés différents de la découpe (16) sont reliées entre elles de manière solidaire en rotation.

5. Machine de récolte selon la revendication 3 ou 4, **caractérisée en ce que** la porte d'accès (20) comporte un profilé de renfort (25) qui s'étend le long de son bord supérieur et qui, dans la position fermée de la porte d'accès (20), comble un espace entre des profilés de renfort (29) des éléments mobiles (8, 9, 10, 11).

6. Machine de récolte selon la revendication 5, **caractérisée en ce que** dans la position fermée, le profilé de renfort (25) de la porte d'accès (20), dans sa direction longitudinale, est en prise, susceptible d'être sollicitée en traction, avec au moins un profilé de renfort (29) des éléments mobiles (8, 9, 10, 11).

7. Machine de récolte selon la revendication 5 ou 6, **caractérisée en ce qu'**elle comprend des moyens de fixation de la porte d'accès (20) dans la position ouverte.

8. Machine de récolte selon une des revendications précédentes, **caractérisée en ce que** les éléments mobiles (8, 9, 10, 11) peuvent être pivotés autour d'axes horizontaux, depuis une position de repos, dans laquelle ils recouvrent une partie inférieure (5) de la trémie pour produits récoltés (4), vers une position d'utilisation dans laquelle ils divergent vers le haut à partir des axes.

9. Machine de récolte selon la revendication 8, **caractérisée en ce que** des paires des éléments mobiles (8, 9, 10, 11), qui se font face de part et d'autre de l'extension de trémie (6) dans la position d'utilisation, se chevauchent au moins en partie dans la position de repos.

10. Machine de récolte selon une des revendications précédentes, **caractérisée en ce qu'**elle comprend une échelle (27) qui est disposée pour permettre à un utilisateur de s'engager dans une partie inférieure (5) de la trémie pour produits récoltés (4).

11. Machine de récolte selon une des revendications précédentes, **caractérisée en ce qu'**elle comprend une échelle (27) qui est montée dans une partie inférieure (5) de la trémie pour produits récoltés (4) et mène à la porte d'accès (20).
